# FASCICULE DE BREVET EUROPEEN

(11) **EP 3 685 599 B1**
(45) Date de publication et mention de la délivrance du brevet: **06.11.2024**
(21) Numéro de dépôt: 18768919.5
(22) Date de dépôt: 19.09.2018
(51) Int. Cl.: H04W 4/14, H04L 67/02, H04W 12/06, H04W 8/22

(54) **PROCEDE DE VERIFICATION DE LA VALIDITE D'UNE LIGNE TELEPHONIQUE D'UN UTILISATEUR**
VERFAHREN ZUR ÜBERPRÜFUNG DER GÜLTIGKEIT EINER TEILNEHMERTELEFONLEITUNG
METHOD FOR VERIFYING THE VALIDITY OF A USER'S TELEPHONE LINE

(30) Priorité: 21.09.2017 FR 1758761
(43) Date de publication de la demande: 29.07.2020
(73) Titulaire: Onoff Telecom, 75010 Paris (FR)
(72) Inventeur: KHRIS, Taïg, 75010 Paris (FR)
(74) Mandataire: Argyma
(86) Numéro de dépôt international: PCT/EP2018/075348
(87) Numéro de publication internationale: WO 2019/057770

(56) Documents cités:
- CN-A- 106 162 527
- US-A1- 2011 072 499

## Description

### DOMAINE TECHNIQUE ET OBJET DE L'INVENTION

De façon générale, l'invention concerne l'authentification d'une ligne téléphonique d'un utilisateur d'un service ou d'une application logicielle. Plus précisément, la présente invention vise un procédé permettant de vérifier la validité d'une carte SIM intégrée à un terminal de communication d'un utilisateur souhaitant activer un service ou une application logicielle. Le procédé selon l'invention permet ainsi de vérifier qu'un utilisateur souhaitant par exemple s'enregistrer sur un serveur d'un système client, en vue de l'utilisation d'un service ou d'une application logicielle, en particulier mis en oeuvre par un terminal de communication portable, tel qu'un smartphone, est bien titulaire d'une ligne téléphonique valide, et d'identifier ladite ligne téléphonique liée à une carte SIM valide présente dans son smartphone, qu'il s'agisse d'une carte SIM physique (« hard SIM » en anglais) ou logicielle (« soft SIM » en anglais).

Il est précisé que, comme cela est connu de l'homme du métier, une carte SIM, SIM étant un acronyme pour « Subscriber Identify Module », signifiant « module d'identification de l'abonné », est une puce comprenant un microcontrôleur et une mémoire et constituant une carte d'abonné à un service de téléphonie mobile, ladite carte étant intégrée à un terminal de communication portable, tel qu'un smartphone. Ci-après, une telle carte SIM est également désignée « carte d'abonné » ou « carte d'abonné à un service de téléphonie ».

Le procédé selon l'invention permet par conséquent l'authentification d'un utilisateur souhaitant utiliser un service ou une application logicielle au moyen d'un terminal de communication, ledit terminal de communication étant apte à participer à une liaison téléphonique ou à envoyer des mini-messages via un réseau de communication téléphonique, par exemple de type GSM (pour « Global System for Mobile Communication » selon l'acronyme anglais signifiant « système global de communication mobile », technologie également désignée sous l'appellation 2G), UMTS (pour « Universal Mobile Télécommunications System » selon l'acronyme anglais signifiant « système de télécommunications mobile universel », technologie également désignée sous l'appellation 3G), LTE (pour « Long Term Evolution » selon l'acronyme anglais signifiant « évolution à long terme », technologie également désignée sous l'appellation 4G) ou CDMA (pour « Code Division Multiple Access » selon l'acronyme anglais signifiant « accès multiple par répartition en code »).

Lorsqu'un tel utilisateur souhaite exécuter un tel service ou une telle application logicielle sur son terminal de communication portable, l'éditeur ou le fournisseur dudit service ou de ladite application logicielle entend pouvoir authentifier ledit utilisateur, en particulier en vérifiant la validité de la ligne téléphonique, c'est-à-dire de la carte SIM, associée au terminal de communication utilisé.

### ETAT DE LA TECHNIQUE

Comme cela est connu, de nombreux fournisseurs de services et éditeurs d'applications logicielles pour smartphones authentifient les utilisateurs de leurs services et applications logicielles au moyen de la vérification de la validité de leurs lignes téléphoniques.

A cette fin, une technique répandue consiste, pour le fournisseur d'un service ou l'éditeur d'une application logicielle, à émettre un message court, également désigné mini-message, de type SMS (pour « Short Message Service » en anglais, signifiant « service de message court »), via un serveur, à destination d'un numéro de ligne téléphonique renseigné par l'utilisateur.

Le message court est reçu sur le terminal de communication de l'utilisateur si ce dernier a correctement renseigné le numéro de la ligne téléphonique correspondant à la carte SIM intégrée à son terminal de communication. Le message court comprend généralement un code de vérification alphanumérique et/ou numérique présentant une durée de validité limitée, ledit code de vérification devant être copié sur une interface, du type interface web, connectée au serveur, pour que le fournisseur du service ou l'éditeur de l'application logicielle puisse vérifier que l'utilisateur a bien reçu le message court, et donc que le numéro de ligne téléphonique qu'il a renseigné est valide.

Cette technique est largement répandue et est mise en oeuvre par de nombreux fournisseurs de services et éditeurs d'applications logicielles, notamment à large échelle.

Or, cette technique connue comprend des inconvénients, en particulier un coût non négligeable, attaché au coût d'envoi des messages courts, et un risque d'interception des messages courts envoyés, permettant à des tiers de s'identifier indûment.

En outre, le coût correspondant à l'envoi d'un message court pour chaque validation, s'il peut déjà s'avérer important, in fine, lorsque le volume d'utilisateurs est élevé, peut encore être démultiplié lorsque, pour des raisons d'encombrement des réseaux de téléphonie, le message court envoyé n'est pas reçu, ou du moins n'est pas reçu immédiatement, par l'utilisateur, de sorte que celui-ci réédite la manipulation, généralement un simple clic sur un bouton de validation, génératrice du message court, démultipliant les coûts de la procédure de validation.

De plus, l'acheminement de messages courts n'est pas sécurisé, et les messages courts envoyés par le serveur peuvent être interceptés et exploités par des personnes tierces, indépendantes de l'utilisateur.

Le document US 2011/072499 A1 décrit un procédé de validation sans envoi de SMS par un serveur de validation. Toutefois, il nécessite une saisie manuelle d'un identifiant du terminal portable de l'utilisateur, ce qui induit une perte de temps et un risque d'erreur.

Pour pallier ces inconvénients, la présente invention propose un procédé de vérification de la validité d'une ligne téléphonique associée à un terminal de communication au moyen duquel un utilisateur souhaite s'enregistrer pour utiliser un service ou une application logicielle.

Le procédé selon l'invention ne nécessite pas l'envoi de messages courts par le fournisseur du service ou l'éditeur de l'application logicielle. Par ailleurs, elle permet une validation sûre de la ligne téléphonique mise en oeuvre par l'utilisateur.

A cette fin, le procédé selon l'invention propose la création d'un numéro technique, correspondant par exemple à un numéro d'appel local du pays dans lequel se trouve l'utilisateur, et l'envoi automatique ou semi-automatique d'un mini-message, par l'utilisateur, à destination dudit numéro technique, comprenant un code de validation.

Le procédé prévoit de provoquer l'émission dudit mini-message de façon visible ou invisible par l'utilisateur.

### PRESENTATION GENERALE DE L'INVENTION

Plus précisément, l'invention vise un procédé de vérification de la validité d'une carte d'abonné à un service de téléphonie mobile d'un utilisateur selon la revendication 1.

Grâce au procédé selon l'invention, le fournisseur du service ou l'éditeur de l'application logicielle réalise des économies dans la mesure où il n'a pas à envoyer des messages courts à chacun des utilisateurs souhaitant utiliser ledit service ou ladite application logicielle.

Selon un mode de réalisation, le numéro technique de validation correspond à un numéro d'appel local du pays dans lequel se trouve l'utilisateur.

Pour connaître le pays dans lequel se trouve le terminal de communication, le service ou l'application ayant suscité la procédure de validation ou le serveur de validation peut interroger la carte d'abonné. Dès lors, le numéro technique de validation utilisé peut être choisi comme étant un numéro d'appel local du pays dans lequel se trouve le terminal de communication.

Selon un mode de réalisation, le numéro technique de validation est téléchargé sur ledit terminal de communication, depuis ledit serveur de validation.

Selon un autre mode de réalisation, le numéro technique de validation est préenregistré sur ledit terminal de communication.

Selon un mode de réalisation, la procédure de validation présente une durée maximale prédéterminée.

Selon un mode de réalisation, l'étape d'initiation est réalisée par le terminal de communication de l'utilisateur et comprend l'envoi d'une requête au serveur de validation.

Selon un mode de réalisation, le code de validation est généré par un système client et ledit code de validation comprend un identifiant du service ou de l'application logicielle auquel la procédure de validation est associée et l'étape de vérification de la correspondance entre le code de validation contenu dans le mini-message reçu par le serveur de validation et le code de validation généré dynamiquement comprend la vérification de la correspondance entre l'identifiant contenu dans le code de validation et l'identifiant du service ou de l'application logicielle auquel la procédure de validation est associée.

Selon un mode de réalisation, l'étape de vérification de la correspondance entre le code de validation contenu dans le mini-message reçu et le code de validation généré dynamiquement est réalisée par un système client.

Selon un mode de réalisation, l'étape de vérification de la correspondance entre le code de validation contenu dans le mini-message reçu et le code de validation généré dynamiquement est réalisée par le serveur de validation.

Selon un mode de réalisation, ledit serveur de validation notifie ledit numéro de ligne téléphonique à un système client.

Selon un mode de réalisation, si aucun mini-message à destination du numéro technique de validation n'est reçu par le serveur de validation, ledit serveur de validation notifie un échec de la procédure de validation.

L'utilisateur peut alors de pas être autorisé à utiliser le service ou l'application logicielle.

### DESCRIPTION DES FIGURES

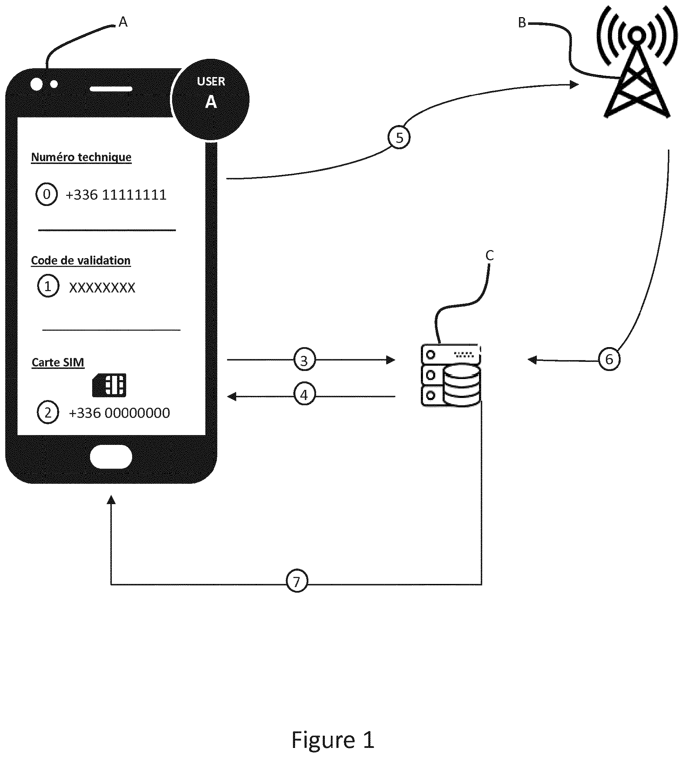

L'invention sera mieux comprise à la lecture de la description qui va suivre, donnée uniquement à titre d'exemple, et se référant à la figure 1 annexée qui représente le schéma bloc fonctionnel du procédé selon l'invention.

### DESCRIPTION DETAILLEE DE L'INVENTION

Il est rappelé que la présente invention est décrite ci-après à l'aide de différents modes de réalisation non limitatifs et est susceptible d'être mise en oeuvre dans des variantes à la portée de l'homme du métier, également visées par la présente invention.

Dans la suite de la description, on entend par « terminal de communication » tout dispositif électronique, notamment tout téléphone portable de type « smartphone », doté de moyens de calcul et de moyens de stockage de données et apte à émettre et à recevoir des mini-messages et des données via un réseau de communication téléphonique et/ou de données.

Sur la figure 1, le terminal de communication A est ainsi, en particulier, un smartphone connecté à un réseau de communication téléphonique et à un réseau de communication de données.

Il est rappelé qu'un réseau de communication téléphonique consiste en une infrastructure de communication privée ou étendue permettant la connexion d'une pluralité d'équipements de communication tels que des serveurs, des commutateurs, des bases de données et des terminaux de communication. De manière connue, l'infrastructure de communication d'un réseau de communication téléphonique forme un réseau sans fil et/ou filaire. En particulier, dans le contexte de l'invention, le réseau de communication téléphonique est de type GSM, CDMA, UMTS ou LTE.

Il est également rappelé qu'un réseau de communication de données consiste en une infrastructure de communication privée ou étendue permettant la connexion d'une pluralité d'équipements de communication, tels que des serveurs, des commutateurs, des bases de données ou des terminaux de communication par exemple. De manière connue, l'infrastructure de communication d'un réseau de communication de données forme un réseau sans fil et/ou filaire. Dans le contexte de l'invention, le réseau de communication de données est notamment un réseau conforme au protocole IP.

En référence à la figure 1, il est représenté un utilisateur User A, doté d'un terminal de communication A, cherchant à accéder à un service ou à activer une application logicielle par exemple.

Pour authentifier l'utilisateur User A, le serveur de validation C a besoin de vérifier la validité de la ligne téléphonique associée au terminal de communication A mis en oeuvre par l'utilisateur User A. Autrement dit, le serveur de validation C doit vérifier la validité de la carte d'abonné 2 de l'utilisateur User A.

Selon l'invention, le procédé de vérification de la validité de la carte d'abonné 2 de l'utilisateur User A se déroule conformément à la séquence décrite ci-après.

En référence à la figure 1, l'utilisateur User A doit obtenir la validation de la ligne téléphonique associée à sa carte d'abonné 2, intégrée en l'espèce au terminal portable A. Dès lors, selon l'invention, le terminal de communication A de l'utilisateur User A initie une procédure de validation en envoyant une requête 3 au serveur de validation C. La requête est par exemple envoyée au format HTTP, HTTP étant un acronyme connu de l'homme de l'art, signifiant « HyperText Transfer Protocol », soit « Protocole de transfert hypertexte », permettant l'envoi de requêtes internet standardisées. Ces requêtes sont acheminées par un réseau de communication de données. A cette fin, par exemple, l'utilisateur User A doit appuyer sur un bouton affiché sur l'écran de son terminal de communication A pour engager une procédure de validation.

Le serveur de validation C génère dynamiquement un code de validation unique 1 et envoie au terminal de communication A une requête-réponse 4, contenant le code de validation unique 1.

Au moyen d'une application logicielle configurée de manière adaptée, le terminal portable de communication A ouvre une application de mini-message pour créer un mini-message pré-rempli, comprenant le code de validation unique 1 et le numéro d'appel de destination. Ledit numéro d'appel de destination consiste en un numéro technique de validation 0, soit sur la figure 1 le +336 11111111. Selon un mode de réalisation, ce numéro technique de validation 0 correspond à un numéro d'appel local du pays dans lequel se trouve l'utilisateur User A. Le numéro technique de validation 0 est par exemple la propriété de l'opérateur mettant en oeuvre le serveur de validation C. Alternativement, le numéro technique de validation 0 peut être un numéro d'appel quelconque, par exemple un numéro d'appel international gratuit convenu entre une pluralité d'opérateurs de téléphonie.

Ledit numéro technique de validation 0 peut être préenregistré sur le terminal de communication A, par exemple dans l'application logicielle évoquée ci-dessus, ou téléchargé depuis le serveur de validation C, notamment dans la requête-réponse 4, en même temps que le code de validation unique 1.

Le terminal de communication A émet alors (étape 5), via la carte d'abonné 2, le mini-message à destination du numéro technique de validation 0. A cette fin, la carte d'abonné 2, autrement dit une carte SIM, qui peut être une carte SIM physique ou logicielle, comme décrit précédemment, correspondant à une carte d'abonné à un service de téléphonie mobile, est apte à acheminer notamment des mini-messages via un réseau de communication téléphonique B.

Selon le mode de réalisation choisi, l'émission 5 du mini-message peut être réalisée en tâche de fond, de manière automatique et invisible pour l'utilisateur User A, ou nécessiter une confirmation d'envoi de la part de l'utilisateur User A, le mini-message et son envoi étant alors visibles de l'utilisateur User A.

Le réseau de communication téléphonique B reçoit le mini-message, contenant le code de validation unique 1 et destiné au numéro technique de validation 0. Le réseau de communication téléphonique B transfère ledit mini-message (étape 6) au propriétaire du numéro technique de validation 0, et le mini-message est ainsi acheminé jusqu'au serveur de validation C. Le transfert 6 du mini-message peut être réalisé par le réseau de communication téléphonique B au moyen de l'émission d'une requête HTTP, via un réseau de communication de données, à destination du serveur de validation C.

Le serveur de validation C reçoit par conséquent le mini-message émis par le terminal portable de communication A, dont le numéro de ligne téléphonique, associé à la carte d'abonné 2, soit, sur la figure 1, le +336 00000000, est transmis par le réseau de communication téléphonique B. Ledit mini-message est destiné au numéro technique de validation 0 et comporte par ailleurs le code de validation unique 1.

Selon un mode de réalisation préféré, le serveur de validation C réalise une étape de vérification des informations reçues. A cette fin, le serveur de validation C compare le code de validation contenu dans le mini-message à celui généré dynamiquement quelques instants auparavant. Avantageusement, le serveur de validation C peut vérifier la correspondance entre le numéro de ligne téléphonique associé à la carte d'abonné ayant émis le mini-message et celui de la carte d'abonné 2 de l'utilisateur User A ayant émis la requête 3 pour initier la procédure de validation.

Si la vérification de la bonne correspondance entre ces informations est positive, le serveur de validation C valide la carte d'abonné 2 et donc la ligne téléphonique associée.

Le serveur de validation C peut en informer le terminal de communication A par une requête 7. Alternativement ou en parallèle, le serveur de validation C informe, par exemple au moyen d'une requête HTTP, un système client susceptible d'autoriser l'utilisateur User A à utiliser le service ou l'application logicielle concerné.

Selon un mode de réalisation alternatif, le serveur de validation C ne réalise pas l'étape de vérification. Dans ce cas, la requête 7 représentée sur la figure 1 comprend le code de validation reçu dans le mini-message, le numéro technique de validation 0 et le numéro de ligne téléphonique associé à la carte d'abonné ayant émis ledit mini-message reçu, correspondant normalement à la carte d'abonné 2, et l'étape de vérification est réalisée sur le terminal de communication A, au moyen de l'application logicielle configurée de manière adaptée, ou via un système client.

Selon un mode de réalisation, le code de validation unique 1 comprend un identifiant du service ou de l'application logicielle ayant suscité la procédure de validation et l'étape de vérification comprend une vérification de cet identifiant.

Si l'étape de vérification ne permet pas de constater la bonne correspondance entre le code de validation unique 1 généré dynamiquement et celui reçu dans le mini-message reçu par le serveur de validation C ou, le cas échéant, entre l'identifiant du service ou de l'application logicielle ayant provoqué la procédure de validation et celui contenu dans le mini-message, alors la procédure de validation échoue et, le cas échéant, l'utilisateur User A et/ou un système client en est informé. L'utilisateur User A peut alors ne pas être autorisé à utiliser le service ou l'application logicielle.

Selon un mode de réalisation, la procédure de validation peut présenter une durée maximale prédéterminée et, si aucun mini-message n'est reçu par le serveur de validation C pendant ladite durée maximale prédéterminée, alors la procédure de validation échoue et, le cas échéant, l'utilisateur User A et/ou un système client en est informé.

Selon un mode de réalisation, le code de validation unique 1 peut présenter une durée de validité prédéterminée et, si aucun mini-message n'est reçu par le serveur de validation C et vérifié pendant ladite durée de validité prédéterminée, alors la procédure de validation échoue et, le cas échéant, l'utilisateur User A et/ou un système client en est informé.

## Revendications

1. Procédé de vérification de la validité d'une carte d'abonné (2) à un service de téléphonie mobile d'un utilisateur (User A), en vue de permettre audit utilisateur (User A) d'utiliser un service ou une application logicielle, au moyen d'un terminal de communication (A) comprenant ladite carte d'abonné (2), le procédé comprenant les étapes suivantes :
- l'initiation d'une procédure de validation associée à l'utilisateur (User A) et audit service ou à ladite application logicielle,
- la connexion du terminal de communication (A) à un serveur de validation (C),
- le téléchargement (4), sur le terminal de communication (A), en même temps, d'un numéro technique de validation et d'un code de validation (1) généré dynamiquement par le serveur de validation (C) et associé à la procédure de validation,
- au moyen d'une application logicielle, l'ouverture par le terminal de communication (A) d'une application de mini-message pour créer un mini-message pré-rempli avec le code de validation et le numéro technique de validation, sur le terminal de communication (A), à destination du numéro technique de validation (0),
- l'envoi (5) du mini-message par le terminal de communication (A), via la carte d'abonné (2), de façon automatique ou manuelle,
- la réception (6) du mini-message par le serveur de validation (C),
- la vérification de la correspondance entre le code de validation contenu dans le mini-message reçu et le code de validation (1) généré dynamiquement,
- l'obtention, par le serveur de validation (C), après réception (6) du mini-message, d'un numéro de ligne téléphonique associé à la carte d'abonné (2), et
- la validation de la carte d'abonné (2) de l'utilisateur (User A) dans la mesure où, à l'étape précédente, la correspondance entre le code de validation contenu dans le mini-message reçu et le code de validation (1) généré dynamiquement a été vérifiée, l'étape de validation nécessitant que ledit numéro de ligne téléphonique associé à la carte d'abonné (2) ait été obtenu.

2. Procédé selon la revendication 1, dans lequel le numéro technique (0) correspond à un numéro d'appel local du pays dans lequel se trouve l'utilisateur (User A).

3. Procédé selon l'une des revendications 1 à 2, dans lequel le numéro technique de validation (0) est téléchargé (4) sur ledit terminal de communication (A), depuis ledit serveur de validation (C).

4. Procédé selon l'une des revendications précédentes, dans lequel l'étape d'initiation est réalisée par le terminal de communication (A) de l'utilisateur (User A) et comprend l'envoi d'une requête (3) au serveur de validation (C).

5. Procédé selon l'une des revendications précédentes, dans lequel le code de validation (1) comprend un identifiant du service ou de l'application logicielle auquel la procédure de validation est associée et l'étape de vérification de la correspondance entre le code de validation contenu dans le mini-message reçu par le serveur de validation et le code de validation (1) généré dynamiquement comprend la vérification de la correspondance entre l'identifiant contenu dans le code de validation et l'identifiant du service ou de l'application logicielle auquel la procédure de validation est associée.

6. Procédé selon l'une des revendications 1 à 5, dans lequel l'étape de vérification de la correspondance entre le code de validation contenu dans le mini-message reçu et le code de validation (1) généré dynamiquement est réalisée par un système client.

7. Procédé selon l'une des revendications 1 à 5, dans lequel l'étape de vérification de la correspondance entre le code de validation contenu dans le mini-message reçu et le code de validation (1) généré dynamiquement est réalisée par le serveur de validation (C).

8. Procédé selon l'une des revendications précédentes, dans lequel, si aucun mini-message à destination du numéro technique de validation (0) n'est reçu par le serveur de validation (C), ledit serveur de validation (C) notifie un échec de la procédure de validation.

## Patentansprüche

1. Verfahren zur Überprüfung der Gültigkeit einer Teilnehmerkarte (2) für einen Mobiltelefonieservice eines Benutzers (User A), um dem Benutzer (User A) die Nutzung eines Dienstes oder einer Softwareanwendung zu mittels eines Kommunikationsendgeräts (A) zu gestatten, das die Teilnehmerkarte (2) umfasst, wobei das Verfahren die folgenden Schritte umfasst:
- Initiieren eines Validierungsverfahrens, das mit dem Benutzer (User A) und dem Dienst oder der Softwareanwendung verknüpft ist,
- Verbinden des Kommunikationsendgeräts (A) mit einem Validierungsserver (C),
- gleichzeitiges Herunterladen (4) einer technischen Validierungsnummer und eines Validierungscodes (1), der dynamisch von dem Validierungsserver (C) generiert wird und mit dem Validierungsverfahren verknüpft ist, auf das Kommunikationsendgerät (A),
- Öffnen einer Mini-Message-Anwendung durch das Kommunikationsendgerät (A) mittels einer Softwareanwendung, um eine mit dem Validierungscode und der technischen Validierungsnummer vorausgefüllte Mini-Message auf dem Kommunikationsendgerät (A) zu generieren, die an die technische Validierungsnummer (0) gerichtet ist,
- automatisches oder manuelles Senden (5) der Mini-Message durch das Kommunikationsendgerät (A) über die Teilnehmerkarte (2),
- Empfangen (6) der Mini-Message durch den Validierungsserver (C),
- Überprüfen der Übereinstimmung zwischen dem in der empfangenen Mini-Message enthaltenen Validierungscode und dem dynamisch generierten Validierungscode (1),
- Erhalten einer mit der Teilnehmerkarte (2) verknüpften Telefonleitungsnummer durch den Validierungsserver (C) nach Empfang (6) der Mini-Message, und
- Validieren der Teilnehmerkarte (2) des Benutzers (User A) insofern, als im vorherigen Schritt die Übereinstimmung zwischen dem in der empfangenen Mini-Message enthaltenen Validierungscode und dem dynamisch generierten Validierungscode (1) verifiziert wurde, wobei der Validierungsschritt erfordert, dass die mit der Teilnehmerkarte (2) verknüpfte Telefonleitungsnummer erhalten wurde.

2. Verfahren nach Anspruch 1, wobei die technische Nummer (0) einer Ortsrufnummer des Landes entspricht, in dem sich der Benutzer (UserA) befindet.

3. Verfahren nach einem der Ansprüche 1 bis 2, wobei die technische Validierungsnummer (0) ab dem Validierungsserver (C) auf das Kommunikationsendgerät (A) heruntergeladen (4) wird.

4. Verfahren nach einem der vorhergehenden Ansprüche, wobei der Initiierungsschritt von dem Kommunikationsendgerät (A) des Nutzers (UserA) durchgeführt wird und das Senden einer Anfrage (3) an den Validierungsserver (C) umfasst.

5. Verfahren nach einem der vorhergehenden Ansprüche, wobei der Validierungscode (1) eine Kennung des Dienstes oder der Softwareanwendung umfasst, mit dem/der das Validierungsverfahren verknüpft ist, und der Schritt der Überprüfung der Übereinstimmung zwischen dem Validierungscode, der in der vom Validierungsserver empfangenen Mini-Message enthalten ist, und dem dynamisch generierten Validierungscode (1) die Überprüfung der Übereinstimmung zwischen der im Validierungscode enthaltenen Kennung und der Kennung des Dienstes oder der Softwareanwendung umfasst, mit dem/der das Validierungsverfahren verknüpft ist.

6. Verfahren nach einem der Ansprüche 1 bis 5, wobei der Schritt der Überprüfung der Übereinstimmung zwischen dem in der empfangenen Mini-Message enthaltenen Validierungscode und dem dynamisch generierten Validierungscode (1) von einem Client-System durchgeführt wird.

7. Verfahren nach einem der Ansprüche 1 bis 5, wobei der Schritt der Überprüfung der Übereinstimmung zwischen dem in der empfangenen Mini-Message enthaltenen Validierungscode und dem dynamisch generierten Validierungscode (1) vom Validierungsserver (C) durchgeführt wird.

8. Verfahren nach einem der vorhergehenden Ansprüche, wobei, wenn keine an die technische Validierungsnummer (0) gerichtete Mini-Message vom Validierungsserver (C) empfangen wird, der Validierungsserver (C) ein Scheitern des Validierungsverfahrens meldet.

## Claims

1. Method for verifying the validity of a telephone service subscriber card (2) of a user (User A), with a view to enabling said user (User A) to use a service or a software application, by means of a communication terminal (A) comprising said subscriber card (2), the method comprising the following steps:
- initiating a validation procedure associated with the user (User A) and with said service or with said software application,
- connecting the communication terminal (A) to a validation server (C),
- downloading (4), on the communication terminal (A), at the same time, a technical validation number and of a dynamically generated validation code (1) by the validation server (C) and associated with the validation procedure,
- by means of a software application, opening a mini-message application by the communication terminal to create a pre-filled mini-message with the validation code and the technical validation number, on the communication terminal (A), bound for a technical validation number (0),
- sending (5) the mini-message by the communication terminal (A), via the subscriber card (2), in an automatic or manual manner,
- receiving (6) the mini-message by the validation server (C),
- verifying the correspondence between the validation code contained in the mini-message received and the dynamically generated validation code (1), and
- validating the subscriber card (2) of the user (User A) in so far as, at the preceding step, the correspondence between the validation code contained in the mini-message received and the dynamically generated validation code (1) has been verified.

2. Method according to claim 1, wherein the technical number (0) corresponds to a local call number of the country wherein is found the user (User A).

3. Method according to one of claims 1 to 2, wherein the technical validation number (0) is downloaded (4) on said communication terminal (A), from said validation server (C).

4. Method according to one of the preceding claims, wherein the initiation step is carried out by the communication terminal (A) of the user (User A) and comprises the sending of a request (3) to the validation server (C).

5. Method according to one of the preceding claims, wherein the validation code (1) comprises an identifier of the service or the software application with which the validation procedure is associated and the step of verification of the correspondence between the validation code contained in the mini-message received by the validation server and the dynamically generated validation code (1) comprises the verification of the correspondence between the identifier contained in the validation code and the identifier of the service or the software application with which the validation procedure is associated.

6. Method according to one of claims 1 to 5, wherein the step of verification of the correspondence between the validation code contained in the mini-message received and the dynamically generated validation code (1) is carried out by a client system.

7. Method according to one of claims 1 to 5, wherein the step of verification of the correspondence between the validation code contained in the mini-message received and the dynamically generated validation code (1) is carried out by the validation server (C).

8. Method according to one of the preceding claims, wherein, if no mini-message destined for the technical validation number (0) is received by the validation server (C), said validation server (C) notifies a failure of the validation procedure.
